# EUROPEAN PATENT APPLICATION

(11) **EP 2 759 521 A1**
(43) Date of publication of application: **30.07.2014**
(21) Application number: 14152530.3
(22) Date of filing: 24.01.2014
(51) Int. Cl.: C03B 11/02, C03B 11/10, C03B 11/12

(54) **Process and apparatus for the realization of a porthole particularly shaped**

(30) Priority: 25.01.2013 IT VR20130019
(71) Applicant: Vetrerie Riunite S.p.A., 37030 Colognola ai Colli (VR) (IT)
(72) Inventor: Foresti, Alberto Maria, 37030 Colognola ai Colli (VR) (IT)
(74) Representative: Fisauli, Beatrice A. M.

(57) **Abstract**

The invention concerns a process and an apparatus for the realization of a glass porthole (10; 30; 50) for electrical household appliances, in which a mold comprises protrusions and/or recesses in order to reproduce a texture on at least one of the surfaces of the porthole.

## Description

The present invention refers, in general, to a process and an apparatus for the realization of a porthole for electrical household appliances such as washing machines, drying machines or the like. More particularly, the present invention concerns a process and an apparatus for the realization of a particularly shaped porthole.

The portholes for electrical household appliances such as washing machine and drying machines, produced according to prior art, are usually made of a transparent material such as glass or plastic so as to make it possible to see inside said goods in order to verify the operation.

For instance, in case of a washing machine, the porthole is useful to ascertain the rotation of the drum, the presence or the absence of water in the drum according to the washing phase and the state of the garments in the washing machine.

The portholes according to prior art consist essentially of a recess shaped like a truncated cone in which the edge of the greater base is joined to the door of the appliance while the smaller base is arranged in the inside of the appliance. In some cases, the smaller base may be partially or entirely inclined in respect to the axis of the truncated cone in order to form water vortices in the inside of the drum to help the washing of clothes.

Although the portholes were always improved, the present portholes known in their several forms and types still have some problems.

First of all, the possibility of seeing the inside of the household appliance involves also the possibility of seeing the dirt and filaments released from the clothes. These residues usually accumulate in the lower part of the porthole, in adjacency to the connecting gasket between porthole and door. Also the gasket itself may thus be seen dirty and damaged over time.

This aspect is unpleasant to the producers of household appliances since the consumer can take a negative view of the article.

In order to hide these areas, silk-screen printed decorations are applied in the most suitable positions to hide said areas but the silk-screen printing has a short duration.

In addition, the portholes of the prior art do not allow a clear vision of the inside of the appliance, especially in the central area of the porthole through which the user would like to see in the best way possible the state of the garments being washed.

Besides, the glass portholes may be subject to accidental bumps which could provoke the breakage of the glass portholes; although these accidents are not very frequent, they could occur not only in the phase of utilization of the appliance, but even more in the assembly of the porthole on the appliance and in the phases of transport and storage of the porthole still to be mounted and of the entire appliance.

In order to limit these problems it is necessary to produce glass portholes having a rather consistent thickness but this implies an increase in the weight of the appliance.

Another problem of the glass portholes according to the prior art is their limited thermal insulation; in fact, in case of washings at high temperatures, the porthole becomes rather hot, even in its outermost surface, and could potentially scald the hand of the user.

Such undesirable eventuality is avoided now by putting a glass disc or a plastic disc at the greater base of the porthole but this involves an increase in the cost of the product and a greater complexity of assembly.

Concerning the process of realization of a porthole, the method of production utilizes the technology of pressed glass.

The pressed glasses are glass products obtained by pressing a predetermined quantity of molten glass in a metallic mold by means of molding systems with matrix and punch.

Specifically, the base process consists in the melting of glass in a continuous melting furnace. Then, the glass is forwarded through heated channels from the furnace to a press. The glass flows molten in the heated channels and comes in proximity of the press: a cutting system forms a gob of glass having an appropriate weight and releases it into the mold below.

In addition to the pressing system with punch, the press comprises also a horizontal rotating table that rotates around its central axis; at least four molds are supported at the periphery of said table and are arranged in succession under the gob zone of the glass gob and here the molds are loaded. As the mold and precisely the matrix containing the glass gob moves forward, the mold reaches a real pressing zone in which a tool, namely, a punch equipped with a hydraulic cylinder, creates the so-called pressed glass: the glass is shaped by taking the shape of the mold so that in this case, the glass takes the shape of a glass porthole.

Then, the so-shaped glass remains in the mold to complete the cooling process in which the glass turns from a plastic state to a rigid state; then, the mold containing the rigid glass reaches an extraction station where the glass is removed from the press and is positioned on a conveyor belt that conveys the glass to a furnace for the final heat treatment.

Once the heat process has been completed, the glass has to cool until reaching the ambient temperature. Then, the glass is controlled and packed to be sent to the customer.

An essential component of the process is the mold that must be carried out in a particular way and has to be heated before being utilized in the production. In particular, the following three main components are necessary for the molding process, these three components being a part of the mold equipment:
- the matrix that replicates the external shape of the porthole;
- the punch that replicates the internal shape of the porthole and is connected to the pressing unit;
- the ring that is used to close the shape during the pressing phase.

The matrix consists in an open, shaped semi-shell that replicates, in the inside, the shape of the porthole by reproducing the external profile.

The punch is the other component that cooperates to shape the glass like a porthole, is provided with an internal cooling water system and is mounted under the pressing unit. The punch presses the glass received in the matrix of the press; this is the reason why the punch is provided with a specific cooling system.

According to prior art, the cooling systems usually consist of a big cylindrical cavity which is arranged in the inside of the punch and through which water flows.

The ring is the third component of the mold equipment. The ring is coupled to the punch of the pressing unit. The function of the ring is to close the coupling between punch and mold and to form the edge of the porthole, the edge being the most critical part of the product.

In fact, the edge of the porthole affects the correct mounting on the frame of the washing machine. In particular, the border must reproduce with precision the seat in the frame of the door, must be free from defects that could provoke breakages, and must allow a perfect planarity to ensure a watertight closure of the washing machine.

An aim of the invention is to remove the aforesaid disadvantages and other ones through a process and an equipment for the realization of a porthole for household electrical appliances, one or more of its surfaces being particularly shaped.

Another aim of the invention is to offer a process and an equipment for the realization of a porthole that allows to perfectly see the inside of the appliance, and in particular to see only the zones of interest, the other internal zones where dirt and filaments of the garments could store up being hidden. Another aim of the invention is to offer a process and an equipment for the realization of a porthole that is resistant to bumps in comparison with the glass portholes of the prior art, without the necessity of increasing its thickness. Another aim of the invention is to offer a process and an equipment to carry out a glass porthole that insulates more the inside from the outside of the appliance.

The above aims and other ones are all achieved according to the invention by a process for the realization of a glass porthole for electrical household appliances, characterized by the fact of comprising the following steps: melting the glass by means of a continuous melting furnace; sending the molten glass through channels from the furnace to a press provided with at least one mold with one matrix, one punch and one coupling ring for the coupling of the matrix with the punch; cutting the molten glass so as to obtain a glass gob whose weight corresponds to the weight of the porthole to be realized; letting the glass gob fall in the mold matrix; pressing the glass gob in the matrix by means of a punch so as to form a porthole; closing the coupling between punch and matrix with a ring forming the edge of the porthole; cooling the glass shaped as a porthole so as to solidify it; lifting the punch; removing the obtained porthole from the matrix; tempering the obtained porthole.

The process according to the invention provides that the cooling takes place through a set of channels disposed in the punch so as to perfectly control the temperature in the inside of the mold and manage the cooling time of the mold.

Advantageously, the process for the realization of a glass porthole may provide that the punch surface comprises recesses and/or protrusions in order to reproduce figures disposed according to a texture on at least one portion of the surface of the glass gob in the matrix. In this way, it is possible to obtain portholes having protrusions and/or recesses on at least one portion of their inner surface.

Likewise, the process according to the invention may provide that the matrix surface comprises recesses and/or protrusions in order to reproduce figures disposed according to a texture on the surface of the glass gob. In this way, it is possible to obtain portholes having protrusions and/or recesses on at least one portion of their outer surface.

Advantageously, the mold may be inclinable so as to modify the shape of the punch with optical techniques, also undercut in respect to the plane of the porthole.

The above-mentioned aims and other ones are all achieved according to the invention by an apparatus for the realization of a glass porthole for electrical household appliances, said apparatus comprising a mold with at least one matrix, at least one punch and at least one ring closing the coupling of the punch with the matrix. In particular, the apparatus is characterized by the fact that the punch surface comprises recesses and/or protrusions in order to reproduce figures disposed according to a texture on at least one portion of the surface of the glass gob in the matrix.

Advantageously, the apparatus according to the invention may comprise at least two matrices and one punch so that the punch acts in succession on each of the two or more matrices. In this way, it is sufficient to replace only the punch with a second punch having recesses and/or protrusions disposed differently from those of the first punch so as to obtain a different porthole. This feature allows to reduce the investment in equipment realizing products always new and different from each other.

Besides, the apparatus according to the invention may provide that also the matrix surface acting on the molten glass comprises recesses and/or protrusions to reproduce figures disposed according to a texture on at least one portion of the surface of the glass gob.

Advantageously, in the apparatus according to the invention, the matrix may be inclinable to modify the shape of the punch so as to realize a porthole with undercut shapes in respect to the plane of the porthole.

The process and the apparatus according to the invention allow to obtain a porthole for household appliances in which protrusions and/or recesses are disposed according to a texture on at least one portion of its outer surface and/or on at least one portion of its inner surface.

In the present description, the inner surface is the surface facing the inside of the appliance when the porthole is mounted.

Through the presence of protrusions and/or recesses forming a texture on at least one portion of the outer surface and/or on at least one portion of the inner surface, which protrusions and/or recesses are obtained by means of the process and apparatus according to the invention, the porthole has a portion that prevents an optimal viewing in the inside of the appliance, at the zone interested by the texture.

Thus, it is possible to keep determined sectors hidden to prevent the user from seeing the dirt and the filaments that detach from the garments during the washing phase, or seeing internal parts of the appliance such as a seal that could deteriorate over time.

Besides, the protrusions and/or the recesses enlarge the extent of the surface and improve the distribution of heat when the porthole comes in contact with water at high temperatures.

The so-obtained porthole is also more resistant as a result of the variable thickness of the surface; in fact, the ribs formed by the protrusions and/or recesses strengthen the surface that is exposed to accidental knocks.

By varying the features of the process and apparatus according to the invention, it is possible to obtain the protrusions and/or the recesses only on the outer surface or only on the inner surface of the porthole so that the realization of the porthole is simplified.

In addition, with a suitable modification of the shape of the matrix and/or punch, the process and the apparatus according to the invention allow to obtain the protrusions and/or the recesses on the side surface or on the upper surface or on the whole surface of the porthole, both internal and external, or according to a combination of said surfaces.

In this way, it is possible to produce portholes in which the so-obtained texture with the protrusions and/or reliefs occupies only a portion of the surface of the porthole, for instance in the sectors that are not to be viewed from the outside of the appliance.

The protrusions and/or recesses may have a recurring geometrical shape so as to form a regular texture, easily recognizable. For instance, the protrusions and/or the recesses may have a replicated hexagonal shape.

Further features and details of the invention may be better understood from the following description which is supplied as a non-restricting example, as well as from the accompanying drawings wherein:
fig. 1 is a sectional side view of a porthole for electrical household appliances, carried out according to the invention;
fig. 2 is an axonometric top view of the porthole in figure 1;
fig. 3 is a sectional side view of a porthole for electrical household appliances, carried out according to a variant of the invention;
fig. 4 is an axonometric top view of the porthole in figure 3;
fig 5 is a sectional side view of a porthole for electric household appliances, carried out according to another variant of the invention;
fig. 6 is an axonometric top view of the porthole in figure 5.

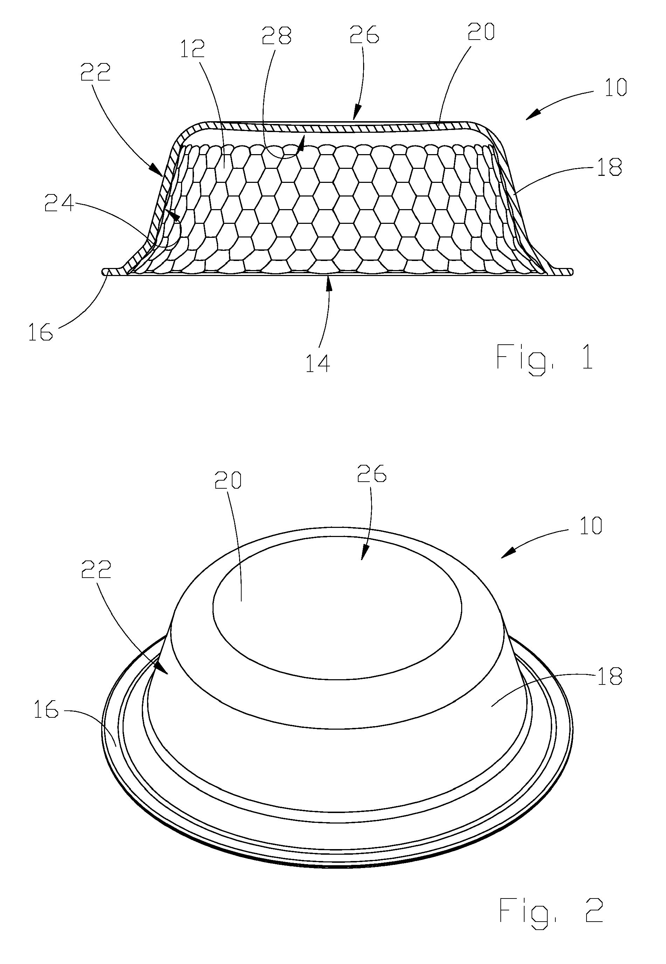

With reference to figures 1 and 2, reference number 10 denotes, on the whole, a porthole for electrical household appliances, made of glass and having the shape of a truncated cone.

According to figure 1, the porthole 10 is hollow in the lower part and comprises a lower open base 14 which is defined by a peripheral edge 16 through which the porthole may be fixed to the door of an electrical household appliance.

A side portion 18 of the porthole 10 develops form the peripheral edge 16 and ends in the upper part with an upper portion 20 that is connected conveniently to the side portion 18.

The porthole 10 has an outer surface and an inner surface. Once the porthole 10 has been mounted on the relative door of the electric household appliance, the outer surface is considered the surface facing the outside of the appliance while the inner surface is considered the surface facing the inside of the appliance, namely, the drum of the washing machine.

More particularly, the side portion 18 has an inner side surface 22 and an outer side surface 24 while the upper potion 20 has an inner upper surface 26 and an outer upper surface 28.

The inner side surface 22 and the inner upper surface 26 are continuous with each other and form the inner surface of the porthole 10. Likewise, the outer side surface 24 and the outer upper surface 28 are continuous with each other and form the outer surface of the porthole 10.

As illustrated in figure 1, the outer side surface 24 is provided with a texture of hexagonal figures. One of these figures is indicated by the reference number 12.

The hexagonal figures 12 are made directly in the molding step of the porthole 10 and make the outer side surface 24 faceted.

Accordingly, the side portion 18 shows a textured outer surface 24 that while maintaining a certain visibility from the outside to the inside, prevents an accurate view of what is placed beyond said side portion.

Thus, the so-shaped side portion 18 prevents to recognize the dirt and/or the filaments that are deposited around the porthole, preferably in adjacency to the connecting seal between door and porthole.

On the contrary, both the inner surface 26 and the outer surface 28 of the upper portion 20 are not interested by any texture so that the upper portion 20 ensures an optimal view in the inside of the appliance.

The outer side surface 24 of the side portion 18 of the porthole 10 has a greater extent than a normal surface in which the texture 12 is not present and consequently, the heat coming from the inside of the appliance finds a greater surface for the heat exchange; in this way, it is possible to reduce the temperature of the porthole 10 when the appliance works at high temperatures.

Not least, the texture 12 on the outer side surface 24 gives the porthole 10 a more pleasant appearance.

In this connection, the presence of the texture 12 ensures a certain distinction of the porthole 10 from the other portholes on the market. Besides, the shape of the figures forming the texture may allow to distinguish the porthole 10 from the other portholes showing a different texture but, in any case, falling under the same scope of protection of the invention.

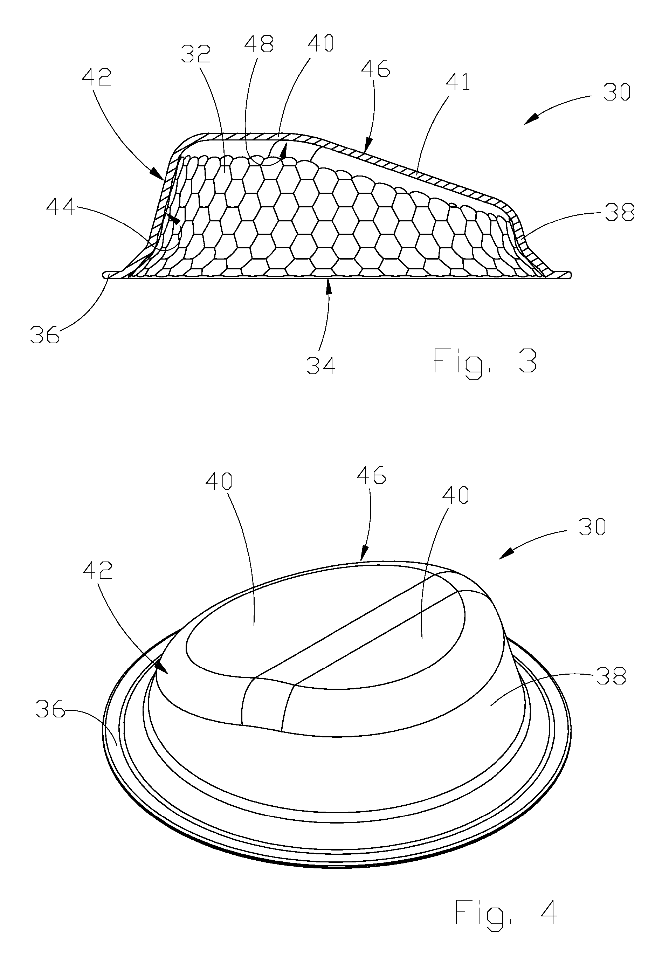

According to a variant of embodiment of the porthole to be produced by utilizing the process and apparatus according to the invention, which variant is illustrated in the figures 3, 4, a porthole 30 is hollow in the lower part and comprises a lower open base 34 which is defined by a peripheral edge 36 through which the porthole may be fixed to the door of an electrical household appliance.

A side portion 38 of the porthole 30 develops form the peripheral edge 36 and ends in the upper part with an upper portion 40 that is connected conveniently to the side portion 38.

The upper portion 40 has a sloping part 41 that slopes down towards a part of the side portion 38 which, therefore, has a variable height.

Like the previously described porthole 10, the porthole 30 has an outer surface and an inner surface. Once the porthole 30 has been mounted on the relative door of the electric household appliance, the outer surface is considered the surface facing the outside of the appliance while the inner surface is considered the surface facing the inside of the appliance.

More particularly, the side portion 38 has an inner side surface 42 and an outer side surface 44 while the upper portion 40 has an inner upper surface 46 and an outer upper surface 48.

The inner side surface 42 and the inner upper surface 46 are continuous with each other and form the inner surface of the porthole 30. Likewise, the outer side surface 44 and the outer upper surface 48 are continuous with each other and form the outer surface of the porthole 30.

As illustrated in figure 3, the outer side surface 44 is provided with a texture of hexagonal figures. One of these figures is indicated by the reference number 32.

The hexagonal figures 32 are made directly in the molding step of the porthole 30 and make the outer side surface 44 faceted.

Also the porthole 30, through the texture defined by the hexagonal figures 32, has the same advantages as described previously in connection with the porthole 10.

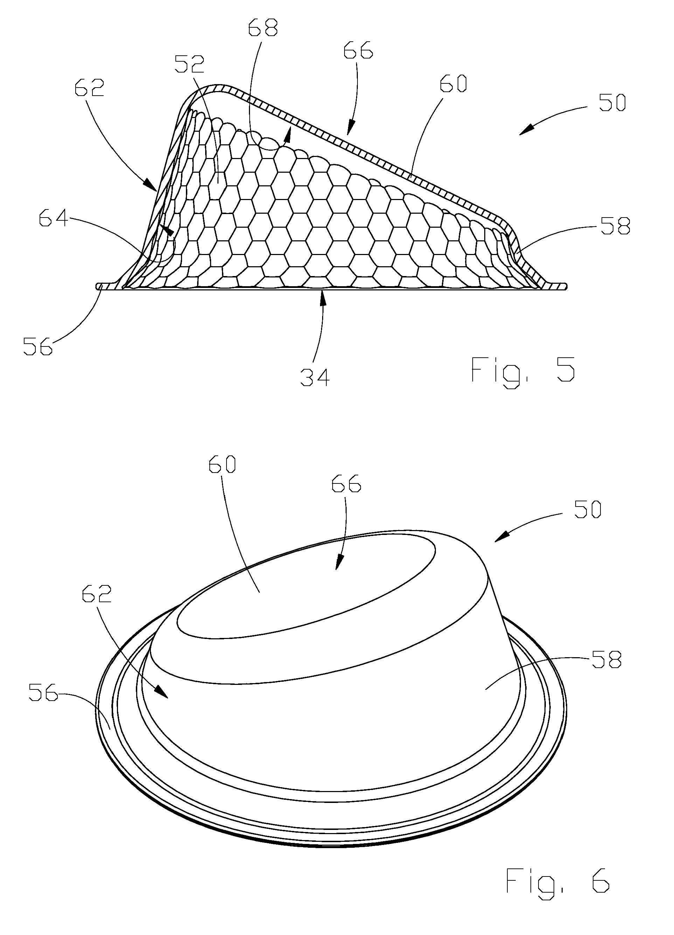

According to another variant of embodiment of the porthole to be produced by utilizing the process and apparatus according to the invention, which variant is illustrated in the figures 5, 6, a porthole 50 is hollow in the lower part and comprises a lower open base 54 which is defined by a peripheral edge 56 through which the porthole may be fixed to the door of an electrical household appliance.

A side portion 58 of the porthole 50 develops form the peripheral edge 56 and ends in the upper part with an upper portion 60 that is connected conveniently to the side portion 58.

Unlike the previously described porthole 10, the upper portion 60 is completely inclined in respect to the circle defined by the peripheral edge 56 and slopes down towards a part of the side portion 58 which, therefore, has a variable height.

Like the previously described porthole 10 and the porthole 30, also the porthole 50 has an outer surface and an inner surface. Once the porthole 50 has been mounted on the relative door of the electric household appliance, the outer surface is considered the surface facing the outside of the appliance while the inner surface is considered the surface facing the inside of the appliance.

More particularly, the side portion 58 has an inner side surface 62 and an outer side surface 64 while the upper potion 60 has an inner upper surface 66 and an outer upper surface 68.

The inner side surface 62 and the inner upper surface 66 are continuous with each other and form the inner surface of the porthole 50. Likewise, the outer side surface 64 and the outer upper surface 68 are continuous with each other and form the outer surface of the porthole 50.

As illustrated in figure 5, the outer side surface 64 is provided with a texture of hexagonal figures. One of these figures is indicated by the reference number 52.

The hexagonal figures 52 are made directly in the molding step of the porthole 50 and make the outer side surface 64 faceted.

Also the porthole 50, through the texture defined by the hexagonal figures 52, has the same advantages as described previously in connection with the porthole 10 and the porthole 30.

Below is a description of the process according to the invention, utilized to produce the previously described portholes or portholes showing a different shape but having at least one surface provided with a texture.

The process according to the invention comprises at first the melting of the glass by means of a continuous melting furnace. The molten glass is sent from the furnace to a press through heated channels in which the molten glass flows.

At the press, a cutting system forms a glass gob of suitable weight that is released in the underlying mold, and more precisely in the mold matrix.

In addition to the mold, the press comprises also a horizontal rotating table that rotates around its central axis: at least four molds are supported at the periphery of said table and are arranged in succession under the zone of release of the glass gob and here the molds are loaded. Each matrix containing the glass gob moves forward and reaches a real pressing zone in which a tool, and precisely a punch equipped with a hydraulic cylinder is coupled with the corresponding matrix so that the glass gob contained in the matrix is pressed by said punch. A ring is coupled to the punch of the mold; the function of the ring is to close the coupling between punch and matrix and to form the edge of the porthole.

Thus, the glass is shaped in taking the shape of the mold, a porthole in this specific case.

Then, the so-shaped glass remains in the mold so as to complete the cooling and passes from a plastic state to a rigid state; then, the mold containing the glass reaches an extraction station where the glass is removed from the matrix and is positioned on a conveyor belt that conveys the glass to a furnace for the final heat treatment.

Once the heat process has been completed, the so-obtained porthole has to cool until reaching the ambient temperature. Then, the glass is controlled and packed to be sent to the customer.

Concerning the three components of the mold: matrix, punch and ring, the thickness of the material, that is steel, between the inner surface and the outer surface is determined appropriately to ensure a correct thermal conditioning of the mold so as to ensure the molding of the glass, give a high quality to the surface of the so-obtained porthole and a high productivity.

In particular, the following factors have been identified:
- right glass weight-to-steel thickness ratio for proper thermal dissipation,
- correct orientation of the mold on the press according to the design of the glass and to how the glass gob must be positioned in the mold,
- correct choice of materials and relative thermal treatments.

Concerning the punch and the cooling system in view of the enormous complexity of the shape, in particular the shape of the surface portion showing the texture, and the large quantity of glass to be pressed, the cooling is obtained with a complex set of channels and asymmetric recesses that have to cooperate in order to ensure a homogeneous correct heat dissipation in all the surface points of the punch.

In addition, since the porthole is a component of an electrical household appliance of high technology, the process according to the invention allows to conveniently manage the dimensions and tolerances; in particular, it is necessary to precisely identify the shrinkages and expansions during the production process in order to ensure the final geometry desired.

Also the clearances between the several elements of the mold equipment are identified appropriately in view of the quality and life of the equipment. Accordingly, the apparatus according to the invention, utilized to obtain a porthole as defined previously, comprises a matrix, a punch and a ring.

In particular, the punch surface comprises recesses and/or protrusions in order to reproduce the previously described figures 12, 32, 52 on the glass surface.

Likewise, in case the texture is to be obtained on the inner surface of the porthole, the recesses and/or protrusions are made on the surface of the matrix.

Besides, according to a variant of the process according to the invention, it is possible to utilize an inclinable mold system in which the matrix is inclinable to modify the shape of the punch also with optical undercut in respect to the plane of the porthole.

The portholes 10, 30, 50 in the three embodiments described previously have a texture 12 showing hexagonal figures but it is to be intended that the shape of said figures may be different, for instance the shape may be square, circular, polygonal, irregular or regular, and consequently, also the corresponding protrusions and/or recesses obtained in the punch and/or in the matrix may vary as regards their shape.

In addition, the texture may be carried out with figures different from each other, the features and advantages of the invention being unchanged.

According to other embodiments of the porthole, the textured surface may be made on the entire outer surface of the porthole or only on the outer upper surface, instead of the outer side surface. Besides, also the inner surface may be interested by a texture of figures; also in this case, only the inner upper surface or the inner side surface as well as the entire inner surface may be interested.

In addition, also the figures obtained on the surface of the porthole may have a concave or convex development so as to enlarge or reduce the image of what is under the porthole portion interested by the texture of figures, the view of the image being enlarged. In this case, the figures allow to have a better view of what is contained in the appliance.

It is to be intended that the shape of the porthole may be different from the shape of the portholes 10, 30, 50, described above, having one or more surfaces interested by a texture of figures.

## Claims

1. Process for the realization of a glass porthole (10; 30; 50) for electrical household appliances, **characterized by the fact of** comprising the following steps:
- melting the glass by means of a continuous melting furnace;
- sending the molten glass through channels from the furnace to a press provided with at least one mold with one matrix, one punch and one coupling ring for the coupling of the matrix with the punch;
- cutting the molten glass so as to obtain a glass gob whose weight corresponds to the weight of the porthole to be realized;
- letting the glass gob fall in the mold matrix;
- pressing the glass gob in the matrix by means of a punch so as to form a porthole;
- closing the coupling between punch and matrix with a ring forming the edge of the porthole;
- cooling the glass shaped as a porthole so as to solidify it;
- lifting the punch;
- removing the obtained porthole from the matrix;
- tempering the obtained porthole.

2. Process for the realization of a glass porthole (10; 30; 50) according to claim 1, wherein the cooling takes place through a set of channels disposed in the punch.

3. Process for the realization of a glass porthole (10; 30; 50) according to one of the preceding claims, wherein the punch surface comprises recesses and/or protrusions in order to reproduce figures (12, 32, 52) disposed according to a texture on at least one portion of the surface of the glass gob in the matrix.

4. Process for the realization of a glass porthole (10; 30; 50) according to one of the preceding claims, wherein the matrix surface comprises recesses and/or protrusions in order to reproduce figures (12, 32, 52) disposed according to a texture on the surface of the glass gob.

5. Process for the realization of a glass porthole (10; 30; 50) according to one of the preceding claims, wherein the mold is inclinable so as to modify the shape of the punch with optical techniques, also undercut in respect to the plane of the porthole.

6. Process for the realization of a glass porthole (10; 30; 50) according to the preceding claim, wherein the mold matrix is inclinable.

7. Apparatus for the realization of a glass porthole (10; 30; 50) for electrical household appliances, said apparatus comprising a mold with at least one matrix, at least one punch and at least one ring closing the coupling of the punch with the matrix, **characterized by** the fact that the punch surface comprises recesses and/or protrusions in order to reproduce figures (12, 32, 52) disposed according to a texture on at least one portion of the surface of the glass gob in the matrix.

8. Apparatus for the realization of a glass porthole (10; 30; 50) according to the preceding claim, wherein at least two matrices and one punch are comprised so that the punch acts in succession on each of the at least two matrices.

9. Apparatus for the realization of a glass porthole (10; 30; 50) according to claim 7 or 8, wherein the matrix surface acting on the molten glass comprises recesses and/or protrusions to reproduce figures (12, 32, 52) disposed according to a texture on at least one portion of the surface of the glass gob.

10. Apparatus for the realization of a glass porthole (10; 30; 50) according to one of claims 7 to 9, wherein the matrix is inclinable to modify the shape of the punch so as to realize a porthole with undercut shapes in respect to the plane of the porthole.
